# EUROPÄISCHE PATENTSCHRIFT

(11) **EP 2 816 777 B1**
(45) Veröffentlichungstag und Bekanntmachung des Hinweises auf die Patenterteilung: **25.10.2017**
(21) Anmeldenummer: 14171554.0
(22) Anmeldetag: 06.06.2014
(51) Int. Cl.: H04L 29/06, H04W 12/06, G07C 9/00, H04L 9/32, H04B 7/185

(54) **Rechnernetz, Netzknoten und Verfahren zur Bereitstellung von Zertifizierungsinformationen**
Computer network, network node and method for providing certification information
Réseau informatique, noeuds de réseau et procédé de mise à disposition d'informations de certification

(30) Priorität: 19.06.2013 DE 102013010171
(43) Veröffentlichungstag der Anmeldung: 24.12.2014
(73) Patentinhaber: Airbus Defence and Space GmbH, 85521 Ottobrunn (DE)
(72) Erfinder: Hanka, Oliver, 80689 München (DE)
(74) Vertreter: Kastel, Stefan

(56) Entgegenhaltungen:
- WO-A2-2008/018902
- US-A- 6 035 402

## Beschreibung

Die Erfindung betrifft ein Rechnernetz zur Datenübertragung zwischen Netzknoten, wobei die Netzknoten mittels Authentifizierungsinformationen einer PKI untereinander authentifizierbar sind. Eine Stammzertifizierungseinrichtung ist zur Erzeugung der Authentifizierungsinformationen für die PKI ausgebildet, von dem Rechnernetz getrennt in einem physisch zugangsbeschränkten ersten Bereich angeordnet und nicht mit dem Rechnernetz verbunden. Darüber hinaus betrifft die Erfindung einen Netzknoten für ein derartiges Rechnernetz mit einem Authentifizierungsinformationsspeicher, einer Verarbeitungseinrichtung und einer Netzwerkkommunikationseinrichtung. Die Erfindung betrifft ebenfalls ein Verfahren zum Authentifizieren eines derartigen Netzknotens an einem derartigen Rechnernetz, wobei die Authentifizierungsinformation eine dem Netzknoten zugeordnete Schlüsselinformation und eine Signaturinformation aufweist, wobei aus einer Schlüsselinformation und einer der Stammzertifizierungsstelle zugeordneten Stammschlüsselinformation eine Signaturinformation erzeugt wird und schließlich der Netzknoten mit dem Rechnernetz verbunden wird.

Zentrales Element einer öffentlichen Schlüsselinfrastruktur (Public Key Infrastructure, PKI) ist die Stammzertifizierungseinrichtung (RootCA), welche Zertifikate ausstellt und Zertifikatsrückrufslisten (Certificate Revocation Lists, CRL, Rückrufinformationslisten) aktuell hält. Für diese Funktionalität wird gewöhnlich eine Verbindung des Netzes zur RootCA benötigt. Bei einer Onboard-Lösung, beispielsweise in einem Luftfahrzeug, treten spezifische Probleme auf. Eine RootCA, die selber Zugang zum Bordnetz aufweist, ist möglicherweise Angreifern ausgesetzt. Um eine ausreichende Sicherheit zu erreichen, wird daher eine aufwändige und teure Absicherung der RootCA, beispielsweise in Form einer Firewall, eingesetzt.

Darüber hinaus muss in einer herkömmlichen PKI-Infrastruktur für Änderungen, beispielsweise um ein Zertifikat auszustellen, ein Zertifikat zurückzuziehen oder die Zertifikatsrückrufslisten zu ändern, eine Verbindung zur RootCA bestehen. Dies kann für Flugzeuge, insbesondere im Flug oder am Boden in einer nicht vertrauensvollen Umgebung, nicht immer möglich sein.

Aus der US 6 035 402 ist ein PKI-System bekannt, bei dem eine Offline-CA separat von einem Rechnernetz angeordnet ist und der Informationsaustausch mit der Offline-CA ausschließlich über Chipkarten abgewickelt wird.

Die WO 2008/018902 A2 offenbart ein Verfahren zur Erkennung von Manipulationsversuchen an Sicherheitsschaltern in Luftfahrzeugen.

Die Erfindung geht auf die **Aufgabe** zurück, Authentifizierungsinformationen einer PKI-Umgebung in einem Luftfahrzeug einfach und sicher verwalten zu können.

Zur Lösung der Aufgabe wird ein Rechnernetz gemäß Patentanspruch 1, ein Netzknoten für das Rechnernetz gemäß Patentanspruch 2 und ein Verfahren zum Authentifizieren des Netzknotens an dem Rechnernetz gemäß Patentanspruch 8 vorgeschlagen.

Vorteilhafte Ausgestaltungen sind jeweils Gegenstand der abhängigen Ansprüche.

Das erfindungsgemäße Rechnernetz hat den Vorteil, dass auf eine Firewall zur Absicherung der Stammzertifizierungseinrichtung verzichtet werden kann. Dadurch werden sowohl das Gewicht als auch der Energieverbrauch des Rechnernetzes reduziert.

Die Stammzertifizierungseinrichtung ist in einem physisch zugangsbeschränkten ersten Bereich angeordnet. Durch einfache bauliche Maßnahmen, wie sie in einem Luftfahrzeug bereits bestehen, kann so ein Zugriff auf das Rechnernetz beschränkt werden. Sofern ein Netzknoten keinen physischen Zugang zu dem ersten Bereich und somit zu der Stammzertifizierungseinrichtung hat, wird er auch keinen Zugang zu dem Rechnernetz an sich erhalten.

Die Stammzertifizierungseinrichtung weist eine drahtlose Kurzstreckendatenübermittlungseinrichtung mit einem Kommunikationsbereich auf, der nicht über den ersten Bereich hinausgeht. Dadurch ist eine vereinfachte drahtlose Kommunikation möglich, diese jedoch effizient auf Kommunikationspartner beschränkt, die Zugang zu dem gesicherten Bereich haben und denen dadurch eine Vertrauensstellung zukommt.

Der erfindungsgemäße Netzknoten erlaubt es, vor seiner endgültigen Installation in oder an dem Luftfahrzeug Authentifizierungsinformationen mittels der Initialisierungskommunikationseinrichtung zu übernehmen und diese Informationen bis zur Inbetriebnahme zu speichern. Zur Aufnahme des Netzknotens in das Rechnernetz ist es somit nur noch notwendig, diesen vor seiner Installation und/oder Inbetriebnahme einmal in den zugriffsbeschränkten Bereich zu bringen.

Der temporäre Authentifizierungsinformationsspeicher des Netzknoten kann derart ausgestaltet sein, dass er von der Initialisierungskommunikationseinrichtung ausschließlich schreibbar ist. Dadurch wird es unmöglich, die Authentifizierungsinformationen mittels der Initialisierungskommunikationseinrichtung, beispielsweise aufgrund eines Softwarefehlers, auslesen zu können,

Die Initialisierungsvorrichtung kann durch die Verarbeitungseinrichtung zerstörbar ausgebildet sein, so dass effektiv verhindert wird, dass die Authentifizierungsinformationen aus dem Netzknoten entfernt werden.

Der Netzknoten kann eine Rückruflistenspeichereinrichtung aufweisen. Dadurch ist es nicht mehr notwendig, eine unmittelbare Verbindung zu der Stammzertifizierungseinrichtung aufrechtzuerhalten, um Zugriff auf Rückrufinformationslisten zu haben.

Vorteilhaft ist die Initialisierungseinrichtung fremdgespeist, so dass sie für die Übernahme der Authentifizierungsinformationen keine eigene Energiequelle benötigt.

Der Netzknoten kann als Access Point für ein WLAN ausgestaltet sein. Ein derartiger Access Point kann anhand der Authentifizierungsinformationen und/oder der Rückrufinformationslisten über eine Gewährung des Zugriffs auf das WLAN entscheiden.

Das erfindungsgemäße Verfahren erlaubt es, einen Netzknoten in ein Rechnernetz einzubuchen beziehungsweise dem Netzknoten Authentifizierungsinformationen für das Rechnernetz zu übermitteln, ohne dass das Rechnernetz mit der dafür vorgesehenen Stammzertifizierungseinrichtung unmittelbar verbunden ist.

Das Verfahren kann vorsehen, die Initialisierungsvorrichtung zu zerstören. Dadurch wird die Sicherheit weiter erhöht.

Vorteilhaft wird die Authentizität einer von einem anderen Netzknoten gesendeten Authentifizierungsinformation anhand der in dem Authentifizierungsinformationsspeicher abgelegten Authentifizierungsinformation geprüft. Schlägt die Prüfung fehl, also lässt sich die Authentifizierungsinformation nicht erfolgreich prüfen, so wird die Kommunikation verweigert. Dadurch wird sichergestellt, dass die Kommunikation nur mit solchen Netzknoten durchgeführt wird, die in den zugangsbeschränkten Bereich gebracht und dort korrekt authentifiziert wurden.

In einer vorteilhaften Ausgestaltung des Verfahrens wird eine Rückrufinformationsliste zusammen mit der Authentifizierungsinformation an die Initialisierungsvorrichtung übermittelt und sodann in dem temporären Authentifizierungsinformationsspeicher abgelegt. Bei Inbetriebnahme des Netzknoten wird die Rückrufinformationsliste in den Authentifizierungsinformationsspeicher übertragen und über das Rechnernetz an andere Netzknoten verteilt. Somit ist es nicht mehr notwendig, für den Zugriff auf die Rückrufinformationsliste unmittelbaren Zugriff auf die Stammzertifizierungseinrichtung zu haben.

Die Authentizität einer von einem anderen Netzknoten gesendeten Authentifizierungsinformation wird bei Vorliegen einer Rückrufinformationsliste vorteilhaft zusätzlich darauf geprüft, ob die Authentifizierungsinformation in der Rückrufinformationsliste enthalten ist. Sofern die Authentifizierungsinformation in der Rückrufportionsliste enthalten ist wird der Kommunikationsvorgang verweigert.

Die Erfindung wird nachfolgend anhand eines Ausführungsbeispiels näher erläutert, das in den beigefügten Figuren schematisch dargestellt ist. Es zeigen im Einzelnen:
- Fig. 1: eine Struktur einer Ausführungsform des Rechnernetzes;
- Fig. 2: eine Nachrichtenübermittlungsdiagramm und
- Fig. 3: eine Detailansicht eines Netzknotens.

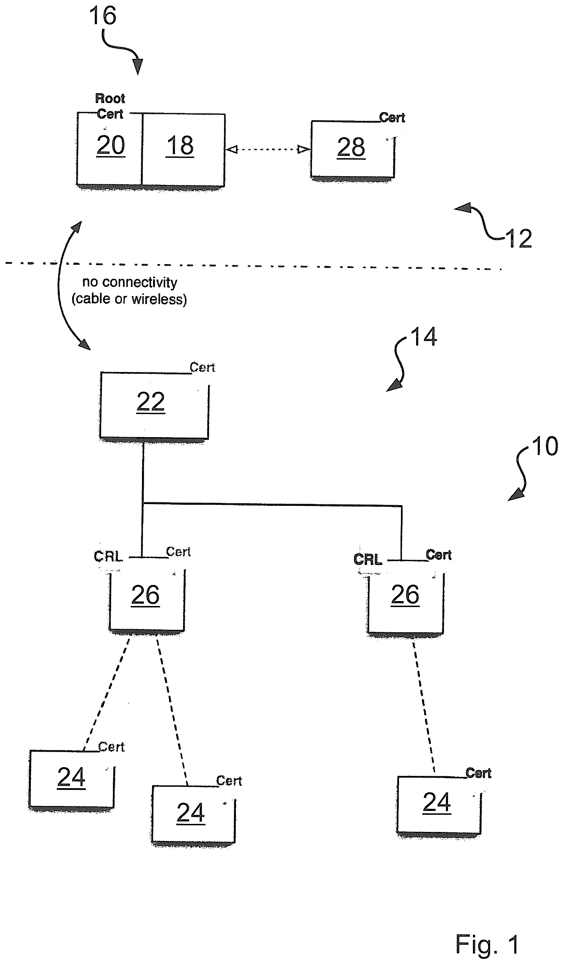

In Fig. 1 ist ein Rechnernetz 10, sowie ein dem Rechnernetz 10 zugeordneter zugangsbeschränkter erster Bereich 12 gezeigt, wobei das Rechnernetz 10 einen öffentlichen zweiten Bereich 14 aufweist.

In dem ersten Bereich 12 ist eine Stammzertifizierungseinrichtung 16, die auch als RootCA bezeichnet wird, angeordnet. Die RootCA 16 weist eine Kommunikationseinrichtung 18 auf, die als drahtlose Kurzstreckendatenübermittlungseinrichtung ausgebildet ist. Die Kommunikationseinrichtung 18 weist zur drahtlosen Kommunikation somit lediglich ein Nahfeld auf, das hier als RFID ausgestaltet ist. Dadurch weist die Kommunikationseinrichtung 18 einen sehr beschränkten Kommunikationsbereich auf, der über den ersten Bereich 12 nicht hinausgeht.

Die RootCA 16 weist eine Signiereinrichtung 20 auf, in der eine Stammschlüsselinformation derart abgespeichert ist, dass sie nicht von außen auslesbar ist. Mittels der Stammschlüsselinformationen kann die Signiereinrichtung 20 digitale Informationen digital derart mit einer Signaturinformation versehen, dass deren Authentizität sichergestellt wird.

In dem zweiten Bereich 14 ist eine Vielzahl von Netzknoten 22, 24, 26 angeordnet, die untereinander vernetzt sind. Der Netzknoten 22 ist mittels einer Kabelverbindung mit den Netzknoten 26 verbunden, die als drahtlose Zugriffspunkte (Access Points) für ein WLAN ausgebildet sind. Die Netzknoten 24 sind drahtlos über das WLAN an die Zugriffspunkte 26 angebunden.

Jeder der Netzknoten 22, 24, 26 weist als Authentifizierungsinformation ein Zertifikat (Cert) auf, das zur Authentifizierung gegenüber den anderen Netzknoten 22, 24, 26 dient. In einer typischen PKI, wie sie in der hier beschriebenen Ausführungsform vorliegt, weist die Authentifizierungsinformation eine private Schlüsselinformation, eine öffentliche Schlüsselinformation, sowie die von der RootCA 16 beziehungsweise deren Signiereinrichtung 20 erstellte Signaturinformation auf.

Um die Authentizität der von anderen Netzknoten 22, 24, 26 bereitgestellten Authentifizierungsinformation zu prüfen können die Netzknoten 24, 24, 26 ein Zertifikat der RootCA 16 aufweisen.

Die Zugriffspunkte 26 weisen über ihr Zertifikat hinaus eine Zertifikatsrückrufsliste (Certificate Revocation List, CRL) auf, in der gespeichert wird, welche Authentifizierungsinformationen von der RootCA 16 zurückgerufen und somit ungültig sind.

Versucht ein Netzknoten 22, 24, 26, sich mit einer derartigen Authentifizierungsinformation an dem Zugriffspunkt 26 anzumelden, so wird ihm die Verbindung verweigert.

Wenn ein Netzknoten 22, 24, 26 von einem anderen Netzknoten 22, 24, 26 Nachrichten empfängt, die nicht von einer gültigen Authentifizierungsinformation begleitet sind, dann können diese Nachrichten verworfen werden.

Um einen neuen Netzknoten 28 mit dem Rechnernetz 10 verbinden zu können benötigt der neue Netzknoten 28 eine gültige Authentifizierungsinformation. Da die RootCA 16 nicht mit dem Rechnernetz 10 verbunden ist, kann der neue Netzknoten 28 diese Authentifizierungsinformation nicht über das Rechnernetz 10 beziehen.

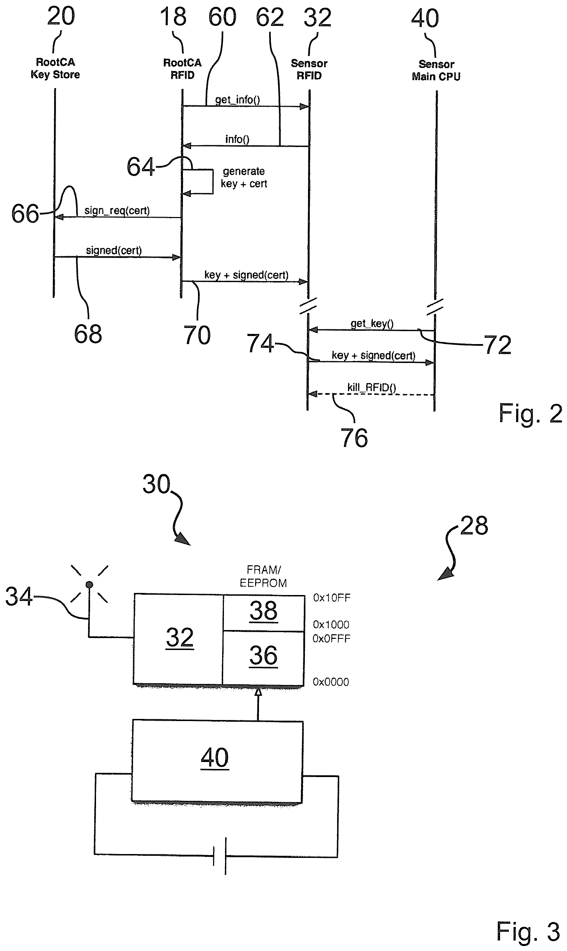

Bevor dem neuen Netzknoten 28 der Zugriff auf das Rechnernetz 10 erlaubt wird, soll nachgewiesen werden, dass der neue Netzknoten 28 beziehungsweise dessen Benutzer eine Zugriffsberechtigung aufweist. Zur Übernahme der Authentifizierungsinformation weisen die Netzknoten 22, 24, 26, 28 wie in Fig. 3 beispielsweise für einen neuen Netzknoten 28 gezeigt, eine Initialisierungsvorrichtung 30 auf. Die folgende Beschreibung des neuen Netzknotens 28 ist genauso auf die Netzknoten 22, 24,26 anwendbar.

Die Initialisierungsvorrichtung 30 weist eine Initialisierungskommunikationseinrichtung 32 mit einer RFID-Antenne 34 auf. Die Initialisierungskommunikationseinrichtung 32 ist als fremdgespeister RFID-Empfänger ausgestaltet und benötigt keine eigene Stromversorgung, da die Betriebsenergie von dem zugehörigen Sender, in diesem Fall der Kommunikationseinrichtung 18, geliefert wird.

Darüber hinaus weist die Initialisierungsvorrichtung 30 einen temporären Authentifizierungsinformationsspeicher 36 auf. Die Initialisierungskommunikationseinrichtung 32 hat ausschließlich Schreibzugriff auf den temporären Authentifizierungsinformationsspeicher 36, in dem sie eine von der Kommunikationseinrichtung 18 der RootCA 16 empfangene Authentifizierungsinformation ablegen kann. Dadurch wird ausgeschlossen, dass eine Authentifizierungsinformation, die in dem temporären Authentifizierungsinformationsspeicher 36 abgelegt wurde, mittels der Initialisierungskommunikationseinrichtung 32 ausgelesen wird. Darüber hinaus kann die Initialisierungsvorrichtung 30 auch Arbeitsspeicher 38 aufweisen, auf denen die Initialisierungskommunikationseinrichtung 32 Schreib- sowie Lesezugriff hat.

Der Netzknoten 28 weist eine Verarbeitungseinrichtung 40 mit einem eigenen Authentifizierungsinformationsspeicher und einer Netzwerkkommunikationseinrichtung auf. Die Initialisierungsvorrichtung 30 und die Verarbeitungseinrichtung 40 sind voneinander funktionell unabhängig. Die Verarbeitungseinrichtung 40 kann allerdings lesend auf den temporären Authentifizierungsinformationsspeicher 36 zugreifen. Wenn die Verarbeitungseinrichtung 40 in Betrieb genommen wird und in ihrem Authentifizierungsinformationsspeicher keine Authentifizierungsinformation vorfindet, so prüft sie, ob der temporäre Authentifizierungsinformationsspeicher 36 eine Authentifizierungsinformation enthält. Ist dies der Fall, so wird die Authentifizierungsinformation aus dem temporären Authentifizierungsinformationsspeicher 36 in den Authentifizierungsinformationsspeicher der Verarbeitungseinrichtung 40 kopiert. Daraufhin kann die Verarbeitungseinrichtung 40 mit einer eigenen Netzwerkkommunikationseinrichtung eine authentifizierte Verbindung zu den anderen Netzknoten 22, 24, 26, 28 aufbauen.

Ein Verfahren, mittels dessen der neue Netzknoten 28 eine gültige Authentifizierungsinformation erhalten kann, ist schematisch in Fig. 2 gezeigt. In einem ersten Schritt 60 fordert die Kommunikationseinrichtung 18 von der Initialisierungskommunikationseinrichtung 32 eine Information über den neuen Netzknoten 28 an.

In einem zweiten Schritt 62 sendet die Initialisierungskommunikationseinrichtung 32 diese Informationen an die Kommunikationseinrichtung 18. In einem dritten Schritt 64 erzeugt die Kommunikationseinrichtung 18 eine Schlüsselinformation sowie eine Zertifikatsinformation. Die Schlüsselinformation und die Zertifikatsinformation werden in einem vierten Schritt 66 zum Signieren an die Signiereinrichtung 20 übermittelt.

In einem fünften Schritt 68 signiert die Signiereinrichtung 20 die Schlüsselinformation und die Zertifikatsinformation. Die signierten Schlüsselinformationen und Zertifikatsinformationen bilden zusammen die Authentifizierungsinformation zur Authentifizierung an anderen Netzknoten 22, 24, 26, 28. Die Signiereinrichtung 20 übermittelt diese Informationen an die Kommunikationseinrichtung 18, welche die Authentifizierungsinformation wiederum in einem sechsten Schritt 70 an die Initialisierungskommunikationseinrichtung 32 sendet.

Die Initialisierungskommunikationseinrichtung 32 legt daraufhin die Authentifizierungsinformation in dem temporären Authentifizierungsinformationsspeicher 36 ab. Die Verarbeitungseinrichtung 40 des neuen Netzknotens 28 muss zu diesem Zeitpunkt noch nicht eingeschaltet gewesen sein. Der gesamte Vorgang kann also vollständig ohne die Verarbeitungseinrichtung 40 ablaufen.

Wird die Verarbeitungseinrichtung 40 eingeschaltet, so fordert sie in einem siebten Schritt 72 die Authentifizierungsinformation von dem temporären Authentifizierungsinformationsspeicher 36 der Initialisierungskommunikationseinrichtung 32 an und erhält diese in einem achten Schritt 74.

Es kann vorgesehen sein, dass die Verarbeitungseinrichtung 40 in einem neunten Schritt 76 einen Befehl an die Initialisierungskommunikationseinrichtung 32 schickt, der dazu führt, dass die Initialisierungskommunikationseinrichtung 32 sich selbst und vor allem den temporären Authentifizierungsinformationsspeicher 36 zerstört.

Das Rechnernetz 10 verwendet somit zur Authentifizierung eine Onboard-PKI mit vom Netz getrennter Certificate Authority/RootCA 16. Das Root Certificate, beziehungsweise das Stammzertifikat ist Gegen Auslesen geschützt. Insbesondere kann es nicht über das Rechnernetz 10 ausgelesen werden.

Die Authentifizierungsinformation, beispielsweise in Form eines Zertifikats, und Rückrufinformationslisten/CRL werden über eine unidirektionale Out-Of-Band-Schnittstelle übertragen.

Die Übertragung der Zertifikate und CRL benötigt keine eigene Stromversorgung der Netzknoten 22, 24, 26, 28. Die Übertragung ist lokal begrenzt, somit wird eine physikalische Authentifizierung (Zugangsberechtigung) bewirkt.

Der Sicherheitslevel der RootCA 16 ist bei gleichzeitig geringeren Kosten im Vergleich zu einer Lösung mit am Netz angebundener RootCA 16 höher. Darüber hinaus ist der organisatorische Aufwand zur Authentifizierung von neuen Netzknoten 22, 24, 26, 28 stark vereinfacht. Neben dem bereits vorhandenen organisatorischen Aufwand der physikalischen Beschränkung werden keine weiteren Rollen und Mechanismen (beispielsweise Trust Agent oder Registration Authority) benötigt.

Zur Realisierung der onboard-PKI-Lösung wird die PKI-Infrastruktur in zwei Bereiche aufgeteilt. Die RootCA 16, welche als Vertrauensanker für alle Netzteilnehmer/Netzknoten 22, 24, 26, 28 gilt, befindet sich in einem physikalisch zugangsbeschränkten ersten Bereich 12, beispielsweise in einem Cockpit eines Luftfahrzeugs. Nur Personen mit Zugangsberechtigung zu diesem physikalisch zugangsbeschränkten ersten Bereich 12 können auf die Funktionen der RootCA 16 direkt zugreifen. Alle anderen Netzkomponenten/Netzknoten 22, 24, 26, 28 befinden sich getrennt hiervon in einem öffentlich zugänglichen zweiten Bereich 14. Zwischen den Bereichen 12,14 besteht keine unmittelbare Kommunikationsverbindung, weder drahtgebunden noch via Funkschnittstelle.

Die RootCA 16 ist dafür zuständig, neue Zertifikate (Authentifizierungsinformation) zu erstellen, sowie eine aktuelle Certificate Revocation List (CRL) zu unterhalten. Auf dieser Liste sind alle nicht mehr gültigen Zertifikate vermerkt. Die Liste kann durch manuelle Eingabe an der RootCA 16 oder automatische Prozesse der RootCA 16 ergänzt werden. Durch Signieren der aktuellsten Liste mittels des geheimen Schlüssels (Stammschlüsselinformation) der RootCA 16 können alle Netzteilnehmer die Korrektheit der CRL verifizieren.

Der private Schlüssel (Stammschlüsselinformation) der RootCA 16, welcher für alle Funktionen benötigt wird, ist in einem sicheren Schlüsselspeicher abgelegt. Dieser Schlüsselspeicher kann beispielsweise als Hardware-Sicherheitsmodul oder Smartkarte realisiert werden. Alle kryptographischen Operationen, die den Einsatz des privaten Schlüssels erfordern, werden von dem Schlüsselspeicher selbst durchgeführt. Der private Schlüssel verlässt also nie den Schlüsselspeicher.

Dies hat den Vorteil, dass der private Schlüssel selbst bei physikalischem Zugang zur RootCA 16 nicht ausgelesen werden kann. Besondere Sorgfalt kann darauf verwandt werden, den Schlüsselspeicher gegen Side-Channel-Attacken zu sichern, wie dies beispielsweise bei Smartkarten der Fall ist.

Wird ein Netzteilnehmer 22, 24, 26, 28 (beispielsweise ein Sensorknoten 24) ausgetauscht, dann wird das Zertifikat des alten Sensorknotens 24 in die CRL/Rückrufinformationsliste eingetragen und ein neues Zertifikat für den neuen Sensorknoten 24 ausgestellt, wie in Fig. 2 gezeigt.

Die Kommunikation zwischen der RootCA 16 und dem neuen Sensorknoten 24 wird durch RFID (Radio Frequency Identification) ermöglicht. Der Vorteil dieses Kommunikationsverfahrens besteht darin, dass der Sensorknoten 24 für diesen Vorgang keine eigene Energiequelle benötigt, sondern von der RootCA 16 fremdgespeist wird. Der schematische Aufbau des Sensorknotens 24 ist in Fig. 3 dargestellt. Des Weiteren lässt sich RFID als Ultra Kurzstrecken-Funktechnologie einsetzen. Dies bedeutet, dass die Kommunikation außerhalb des zugangsbeschränkten ersten Bereichs 12 nicht mitgehört oder beeinflusst werden kann.

Jeder neue Sensorknoten 24 hält in dem Speicher seines RFID-Controllers, der hier die Initialisierungsvorrichtung 30 bildet, Informationen über sich selbst bereit (beispielsweise Seriennummer, Geräteklasse etc.). In einem ersten Schritt wird diese Information von der RootCA 16, beziehungsweise von deren Kommunikationseinrichtung 18, ausgelesen. Anschließend generiert die RootCA 16, insbesondere deren Signiereinrichtung 20, ein neues Schlüsselpaar (bestehend aus privatem und öffentlichem Schlüssel), erzeugt mithilfe der vom Sensor ausgelesenen Informationen ein neues Zertifikat und benutzt ihren eigenen privaten Schlüssel, um das Zertifikat zu Signieren. Anschließend werden das Schlüsselpaar sowie das Zertifikat, die zusammen die Authentifizierungsinformation bilden, wieder mithilfe von RFID auf den Sensor übertragen. Der RFID Controller des Sensors legt hierbei den Schlüssel sowie das Zertifikat in einem Speicherbereich/-block ab, der vom RFID Controller nur beschrieben, aber nicht gelesen (write only) werden kann (temporärer Authentifizierungsinformationsspeicher 36). Auf diese Weise ist ein Auslesen des Schlüssels über RFID nicht möglich.

Anschließend wird der Sensorknoten 24 an seinen eigentlichen Einbauplatz gebracht. Sobald der Sensorknoten 24 durch seine eigene Stromversorgung (Batterie oder Kabel) eingeschaltet wird, durchläuft er eine (einmalige) Initialisierungsphase. In dieser Phase liest der Hauptprozessor (Verarbeitungseinrichtung 40) des Sensorknotens 24 das Schlüsselpaar sowie das Zertifikat aus dem temporären Authentifizierungsinformationsspeicher 36 des RFID Controllers aus und speichert diese in seinem eigenen geschützten Speicher. Anschließend kann je nach Anforderung eine Zerstörungssequenz an den RFID Controller gesendet werden. Hierdurch zerstört sich der RFID Controller selbst und wird unbrauchbar.

Der kryptographischen Betrieb des Sensors läuft dann wie bei herkömmlichen Systemen ab. Gegenstellen (beispielsweise weitere Sensorknoten, Zugriffspunkte und andere Netzteilnehmer) können durch deren Zertifikate identifiziert werden und so Vertrauensbeziehungen aufbauen.

Die CRL gelangt auf ähnliche Weise wie die Authentifizierungsinformation in den aktiven Teil des Rechnernetzes 10. Die von der RootCA 16 signierte Liste wird von der RootCA 16 auf den RFID-Controller eines Sensors oder auf ein RFID-Modul eines anderen Netzteilnehmers/Netzknotens 22, 24, 26, 28 übertragen. Sobald der Sensorknoten 24 oder Netzteilnehmer 22, 24, 26, 28 eine Verbindung zum Rechnernetz 10 aufnimmt, kann die CRL beispielsweise an die angeschlossenen Access Points 26 verteilt werden. Während der Übertragung ist die CRL durch die beigefügte Signatur der RootCA 16 gegen eine unbemerkte Manipulation gesichert.

Auf diese Weise kann die CRL zu jedem Zeitpunkt aktualisiert werden, ohne dass zur RootCA 16 eine direkte Kommunikationsverbindung besteht. Die Übertragung von Authentifizierungsinformation, Schlüsseln, Zertifikaten sowie der CRL geschieht über eine unidirektionale Out-Of-Band-Signalisierung.

Die Erfindung erlaubt es, in einem Luftfahrzeug auf einfache Art und Weise die Sicherheit bei Verwendung einer PKI zur Authentifizierung von Netzknoten 22, 24, 26, 28 eines Rechnernetzes zu verbessern.

### Bezugszeichenliste

- 10: Rechnernetz
- 12: erster Bereich (zugangsbeschränkt)
- 14: zweiter Bereich (öffentlich)
- 16: Stammzertifizierungseinrichtung/RootCA
- 18: Kommunikationseinrichtung
- 20: Signiereinrichtung
- 22: Netzknoten
- 24: Netzknoten (drahtlos)/Sensorknoten
- 26: Netzknoten/Zugriffspunkt/Access Point
- 28: (neuer) Netzknoten
- 30: Initialisierungsvorrichtung
- 32: Initialisierungskommunikationseinrichtung
- 34: RFID-Antenne
- 36: temporärer Authentifizierungsinformationsspeicher
- 38: Arbeitsspeicher
- 40: Verarbeitungseinrichtung

- 60: 1. Schritt
- 62: 2. Schritt
- 64: 3. Schritt
- 66: 4. Schritt
- 68: 5. Schritt
- 70: 6. Schritt
- 72: 7. Schritt
- 74: 8. Schritt
- 76: 9. Schritt

## Patentansprüche

1. Rechnernetz (10) zur Datenübertragung zwischen Netzknoten (22, 24, 26, 28), wobei die Netzknoten (22, 24, 26, 28) mittels Authentifizierungsinformationen einer PKI untereinander authentifizierbar sind,
mit einer zur Erzeugung der Authentifizierungsinformationen für die PKI ausgebildeten Stammzertifizierungseinrichtung (16), wobei die Stammzertifizierungseinrichtung (16) von dem Rechnernetz (10) getrennt angeordnet und nicht mit dem Rechnernetz (10) verbunden ist, und wobei die Stammzertifizierungseinrichtung (16) in einem physisch zugangsbeschränkten ersten Bereich (12) angeordnet ist, **dadurch gekennzeichnet, dass** die Stammzertifizierungseinrichtung (16) eine drahtlose Kurzstreckendatenübermittlungseinrichtung (18) mit einem Kommunikationsbereich aufweist, der nicht über den ersten Bereich (12) hinausgeht.

2. Netzknoten (22, 24, 26, 28) für ein Rechnernetz nach Anspruch 1, mit einem Authentifizierungsinformationsspeicher, einer Verarbeitungseinrichtung (40) und einer Netzwerkkommunikationseinrichtung, **dadurch gekennzeichnet, dass** der Netzknoten (22, 24, 26, 28) eine Initialisierungsvorrichtung (30) aufweist, die eine Initialisierungskommunikationseinrichtung (32) und einen temporären Authentifizierungsinformationsspeicher (36) aufweist, wobei der temporäre Authentifizierungsinformationsspeicher (36) von der Verarbeitungseinrichtung (40) auslesbar ist.

3. Netzknoten nach Anspruch 2, **dadurch gekennzeichnet, dass** der temporäre Authentifizierungsinformationsspeicher (36) von der Initialisierungskommunikationseinrichtung (32) ausschließlich schreibbar ist.

4. Netzknoten nach Anspruch 2 oder 3, **dadurch gekennzeichnet, dass** die Initialisierungsvorrichtung (30) durch die Verarbeitungseinrichtung (40) zerstörbar ist.

5. Netzknoten nach einem der Ansprüche 2 bis 4, **dadurch gekennzeichnet, dass** der Netzknoten (22, 24, 26, 28)eine Rückruflistenspeichereinrichtung aufweist.

6. Netzknoten nach einem der Ansprüche 2 bis 5, **dadurch gekennzeichnet, dass** die Initialisierungseinrichtung (30) fremdgespeist ist.

7. Netzknoten nach einem der Ansprüche 2 bis 6, **dadurch gekennzeichnet, dass** der Netzknoten (26) als Access Point für ein WLAN ausgebildet ist.

8. Verfahren zum Authentifizieren eines Netzknotens (22, 24, 26, 28) an einem Rechnernetz (10) gemäß Anspruch 1, wobei die Authentifizierungsinformation eine dem Netzknoten (22, 24, 26, 28) zugeordnete Schlüsselinformation und eine Signaturinformation aufweist, mit den Schritten:
a) Erzeugen einer Signaturinformation aus der Schlüsselinformation und einer der Stammzertifizierungseinrichtung (16) zugeordneten Stammschlüsselinformation;
b) Übermitteln der aus der Schlüsselinformation und der Signaturinformation gebildeten Authentifizierungsinformation an eine Initialisierungskommunikationseinrichtung (32);
d) Verbinden des Netzknotens (22, 24, 26, 28) mit dem Rechnernetz (10); **gekennzeichnet durch die Verwendung eines Netzknotens gemäß einem der Ansprüche 2 bis 7 sowie durch die Schritte:**
c) Abspeichern der Authentifizierungsinformation in dem temporären Authentifizierungsinformationsspeicher (36);
e) Übertragen der Authentifizierungsinformation aus dem temporären Authentifizierungsinformationsspeicher (36) in den Authentifizierungsinformationsspeicher.

9. Verfahren gemäß Anspruch 8, **gekennzeichnet durch den Schritt:**
f) Zerstören der Initialisierungsvorrichtung (30).

10. Verfahren gemäß Anspruch 8 oder 9, **gekennzeichnet durch den Schritt:**
g) Prüfen der Authentizität einer von einem anderen Netzknoten (22, 24, 26, 28) gesendeten Authentifizierungsinformation anhand der in dem Authentifizierungsinformationsspeicher abgelegten Authentifizierungsinformation und Verweigern eines Kommunikationsvorgangs, sofern die Prüfung fehlschlägt.

11. Verfahren gemäß einem der Ansprüche 8 bis 10, **gekennzeichnet durch die Schritte:**
h) Übermitteln einer Rückrufinformationsliste an die Initialisierungsvorrichtung (30) in Schritt b);
i) Abspeichern der Rückrufinformationsliste in dem temporären Authentifizierungsinformationsspeicher (36) in Schritt c);
j) Übertragen der Rückrufinformationsliste in den Authentifizierungsinformationsspeicher in Schritt e);
k) Übermitteln der Rückrufinformationsliste an andere Netzknoten (22, 24, 26, 28) über das Rechnernetz (10).

12. Verfahren gemäß Anspruch 10 und Anspruch 11, **gekennzeichnet durch die Schritte:**
l) Vergleichen der Authentifizierungsinformation mit der Rückrufinformationsliste und Verweigern eines Kommunikationsvorgangs, sofern die von dem anderen Netzknoten (22, 24, 26, 28) gesendete Authentifizierungsinformation in der Rückrufinformationsliste enthalten ist.

## Claims

1. Computer network (10) for data transmission between network nodes (22, 24, 26, 28), wherein said network nodes (22, 24, 26, 28) can be authenticated among each other by means of authentication information from PKI,
comprising a root certification device (16) for generating authentication information for said PKI, wherein said root certification device (16) is arranged separately from said computer network (10) and is not connected to said computer network (10), and wherein said root certification device (16) is arranged in a first area (12) of physically limited access,
**characterized in that** said root authentication device (16) is a wireless short-range data transmission device (18) including a communication area that does not exceed said first area (12).

2. Network node (22, 24, 26, 28) for a computer network according to claim 1, comprising an authentication information storage, a processing device (40) and a network communication device, **characterized in that** said network node (22, 24, 26, 28) comprises an initialization device (30) including an initialization communication device (32) and a temporary authentication information storage (36), wherein said temporary authentication storage (36) is readable by said processing device (40).

3. Network node according to claim 2, **characterized in that** said temporary authentication information storage (36) is exclusively writeable by said initialization communication device (32).

4. Network node according to claim 2 or 3, **characterized in that** said initialization device (30) is destructible by said processing device (40).

5. Network node according to one of the claims 2 to 4, **characterized in that** said network node (22, 24, 26, 28) comprises a callback list storage device.

6. Network node according to one of the claims 2 to 5, **characterized in that** said initialization device (30) is externally powered.

7. Network node according to one of the claims 2 to 6, **characterized in that** said network node (26) is configured as an access point for a WLAN.

8. Method for authenticating a network node (22, 24, 26, 28) in a computer network (10) according to claim 1, wherein said authentication information includes associated key information and signature information, said method comprising the steps of:
a) generating signature information from said key information and root key information associated to sais root certification device (16);
b) conveying said authentication information generated form said key information and said signature information to an initialization communication device (32);
d) connecting said network node (22, 24, 26, 28) to said computer network (10), **characterized by the use of a network node according to one of the claims 2 to 7 as well as the steps of:**
c) saving said authentication information in said temporary authentication information storage (36);
e) transmitting said authentication information from said temporary authentication information storage (36) to said authentication information storage.

9. Method according to claim 8, **characterized by the step of:**
f) disrupting said initialization device (30).

10. Method according to claim 8 or 9, **characterized by the step of:**
g) checking the authenticity of authentication information sent from a different network node (22, 24, 26, 28) using authentication information stored in said authentication information storage and denying a communication process if this check fails.

11. Method according to one of the claims 8 to 10, **characterized by the steps of:**
h) conveying a callback information list to said initialization device (30) in step b);
i) saving said callback information list in said temporary authentication information storage (36) in step c);
j) transferring said callback information list to the authentication information storage in step e);
k) conveying said callback information list to other network nodes (22, 24, 26, 28) via said computer network (10).

12. Method according to claim 10 and claim 11, **characterized by the steps of:**
l) comparing said authentication information with said callback information list and denying a communication process if said authentication information sent from said other network node (22, 24 26, 28) is included in the callback information list.

## Revendications

1. Réseau informatique (10) pour la transmission de données entre des noeuds de réseau (22, 24, 26, 28), dans lequel les noeuds de réseau (22, 24, 26, 28) sont identifiables entre eux au moyen d'informations d'authentification d'une ICP (infrastructure à clé publique),
comportant un moyen de certification maître (16) réalisé pour générer les informations d'authentification pour la ICP,
dans lequel le moyen de certification maître (16) est agencé séparément du réseau informatique (10) et n'est pas relié au réseau informatique (10), et le moyen de certification maître (16) est agencé dans une première zone (12) à accès physique restreint,
**caractérisé en ce que**
le moyen de certification maître (16) comprend un moyen de transmission de données (18) courte distance sans fil pourvu d'une zone de communication qui ne va pas au-delà de la première zone (12).

2. Noeud de réseau (22, 24, 26, 28) pour un réseau informatique selon la revendication 1, comportant une mémoire d'informations d'authentification, un moyen de traitement (40) et un moyen de communication de réseau, **caractérisé en ce que** le noeud de réseau (22, 24, 26, 28) comprend un dispositif d'initialisation (30) qui comprend un moyen de communication d'initialisation (32) et une mémoire temporaire d'informations d'authentification (36), la mémoire temporaire d'informations d'authentification (36) pouvant être lue par le moyen de traitement (40).

3. Noeud de réseau selon la revendication 2, **caractérisé en ce que** la mémoire temporaire d'informations d'authentification (36) du moyen de communication d'initialisation (32) est exclusivement inscriptible.

4. Noeud de réseau selon la revendication 2 ou 3, **caractérisé en ce que** le dispositif d'initialisation (30) est destructible par le moyen de traitement (40).

5. Noeud de réseau selon l'une des revendications 2 à 4, **caractérisé en ce que** le noeud de réseau (22, 24, 26, 28) comprend un moyen de mémoire de liste de rappel.

6. Noeud de réseau selon l'une des revendications 2 à 5, **caractérisé en ce que** le moyen d'initialisation (30) est alimenté par voie externe.

7. Noeud de réseau selon l'une des revendications 2 à 6, **caractérisé en ce que** le noeud de réseau (26) est réalisé sous forme de Access Point pour un réseau Wi-Fi.

8. Procédé d'authentification d'un noeud de réseau (22, 24, 26, 28) sur un réseau informatique (10) selon la revendication 1, dans lequel l'information d'authentification présente une information clé associée au noeud de réseau (22, 24, 26, 28) et une information de signature, comprenant les étapes consistant à :
a) générer une information de signature à partir de l'information clé et d'une information clé maître associée au moyen de certification maître (16) ;
b) communiquer à un moyen de communication d'initialisation (32) l'information d'authentification formée par l'information clé et par l'information de signature ;
d) connecter le noeud de réseau (22, 24, 26, 28) au réseau informatique (10) ;
**caractérisé par** l'utilisation d'un noeud de réseau selon l'une des revendications 2 à 7 ainsi que par les étapes consistant à :
c) mémoriser l'information d'authentification dans la mémoire temporaire d'informations d'authentification (36) ;
e) transmettre l'information d'authentification depuis la mémoire temporaire d'information d'authentification (36) vers la mémoire d'information d'authentification.

9. Procédé selon la revendication 8, **caractérisé par** l'étape consistant à f) détruire le dispositif d'initialisation (30).

10. Procédé selon la revendication 8 ou 9, **caractérisé par** l'étape consistant à :
g) vérifier l'authenticité d'une information d'authentification envoyée par un autre noeud de réseau (22, 24, 26, 28) en se basant sur l'information d'authentification stockée dans la mémoire d'information d'authentification et refuser une opération de communication si la vérification est défaillante.

11. Procédé selon l'une des revendications 8 à 10, **caractérisé par** les étapes consistant à :
h) communiquer une liste d'information de rappel au dispositif d'initialisation (30) dans l'étape b) ;
i) mémoriser la liste d'information de rappel dans la mémoire temporaire d'information d'authentification (36) dans l'étape c) ;
j) transmettre la liste d'information de rappel dans la mémoire d'information d'authentification dans l'étape e) ;
k) communiquer la liste d'information de rappel à d'autres noeuds de réseau (22, 24, 26, 28) via le réseau informatique (10).

12. Procédé selon la revendication 10 et la revendication 11, **caractérisé par** les étapes consistant à :
l) comparer l'information d'authentification à la liste d'information de rappel et refuser une opération de communication si l'information d'authentification envoyée par l'autre noeud de réseau (22, 24, 26, 28) est comprise dans la liste d'information de rappel.
